# EUROPÄISCHE PATENTSCHRIFT

(11) **EP 2 054 295 B1**
(45) Veröffentlichungstag und Bekanntmachung des Hinweises auf die Patenterteilung: **28.04.2010**
(21) Anmeldenummer: 06776857.2
(22) Anmeldetag: 15.08.2006
(51) Int. Cl.: B63B 35/79, B63H 9/06, B64C 31/06, B63B 15/00

(54) **START- UND BERGEVORRICHTUNG FÜR EIN AERODYNAMISCHES PROFILELEMENT UND AERODYNAMISCHES PROFILELEMENT**
STARTING AND RECOVERING DEVICE FOR AN AERODYNAMIC PROFILED ELEMENT, AND AERODYNAMIC PROFILED ELEMENT
DISPOSITIF DE DEMARRAGE ET DE RECUPERATION POUR ELEMENT PROFILE AERODYNAMIQUE ET ELEMENT PROFILE AERODYNAMIQUE

(43) Veröffentlichungstag der Anmeldung: 06.05.2009
(73) Patentinhaber: Skysails GmbH & Co. KG, 21079 Hamburg (DE)
(72) Erfinder: WRAGE, Stephan, 21079 Hamburg (DE); BRABECK, Stephan, 21079 Hamburg (DE)
(74) Vertreter: Birken, Lars
(86) Internationale Anmeldenummer: PCT/EP2006/008049
(87) Internationale Veröffentlichungsnummer: WO 2008/019700

(56) Entgegenhaltungen:
- WO-A-01/58755
- WO-A-2005/100150
- DE-A1- 19 957 207
- DE-A1- 19 961 035
- DE-C1- 10 109 640
- FR-A1- 2 837 166
- GB-A- 2 098 950
- US-A1- 2004 140 393
- US-A1- 2006 065 787
- US-B1- 6 789 489

## Beschreibung

Die Erfindung betrifft ein aerodynamisches Profilelement zur Energieerzeugung, mittels Zugkraft, insbesondere zum Antreiben von Wasserfahrzeugen, umfassend:
- eine obere flexible Lage, die sich in einer Querrichtung und einer Längsrichtung erstreckt,
- eine untere flexiblen Lage, die sich parallel zur oberen Lage erstreckt und mittels mehrerer sich in Tiefenrichtung des Profilelements erstreckender Stege mit der oberen Lage verbunden ist,
- einen luftgefüllten Innenraum zwischen der oberen und unteren Lage
- zumindest eine zwischen zwei parallel zueinander liegenden Vorderkanten der oberen und unteren Lage angeordnete Belüftungsöffnung zum Belüften des Innenraums,
- mehrere Zugleinen, die mit einem ersten Ende an beabstandeten Orten am Profilelement befestigt sind und mit einem zweiten Ende mit einem Zugseil verbunden sind zum Verbinden des Profilelements mit einem Wasserfahrzeug,
- mehrere an einem ersten Ende an den Lagen und/oder Stegen befestigten Reffleinen, die ausgebildet sind, um die Größe des Profilelements durch Reffen oder Entreffen der oberen und unteren Lage zu verringern bzw. zu vergrößern.

Ein weiterer Aspekt der Erfindung ist eine Start- und Bergevorrichtung für ein Profilelement nach einem der vorhergehenden Ansprüche, wobei das Profilelement ein sich in Längsrichtung erstreckendes Stabelement aufweist und die Start- und Bergevorrichtung umfasst:
- einen Mast, an dessen oberen Ende ein Mastkopf befestigt ist,
- einen am Mastkopf angeordnete um eine vertikale Achse drehbare Kopplungsvorrichtung zum Koppeln des vorderen Endes des Profilelements mit dem Mastkopf.

Im Zuge der Verknappung und Verteuerung fossiler Brennstoffe besteht ein großer Bedarf an alternativen Vorrichtungen zur Energiegewinnung aus erneuerbaren Energiequellen, insbesondere beispielsweise als Antriebsvorrichtungen für Wasserfahrzeuge. Aus WO 2006/027194 und WO 2006/027195 ist eine neuartige Antriebsvorrichtung für Wasserfahrzeuge bekannt, die im Wesentlichen aus einem aerodynamischen Profilelement in Form eines Kites der eingangs beschriebenen Art besteht, das mittels einer Start- und Bergevorrichtung der eingangs genannten Art vom Wasserfahrzeug aus gestartet und geborgen werden kann.

Aus der internationalen Patentanmeldung PCT/EP2005/004186 ist ein Setzsystem für ein solches aerodynamisches Profilelement bekannt, welches, eine azimutal schwenkbare Halterung aufweist. Weiterhin ist aus PCT/EP2005/004183 eine Positionierungsvorrichtung für ein solches aerodynamisches Profilelement bekannt, welches eine Winsch umfasst, die ein Holen und Fieren des aerodynamischen Profilelements bei Unterschreiten bzw. Überschreiten einer vorgegebenen Zugkraft im Zugseil ermöglicht.

Nächstliegender Stand der Technik wird gezeigt in WO 2005/100150.

Solche Profilelemente und Setzsysteme werden insbesondere als Schiffantrieb verwendet, können grundsätzlich aber auch dafür eingesetzt werden, Energie, beispielsweise elektrische Energie zu erzeugen, indem die Zugseilkraft mittels eines Zyklus des Fierens und Holens des Zugseils zur Energieerzeugung genutzt wird. Zu diesem Zweck können die Profilelemente stationär auf Land eingesetzt werden oder auch stationär oder beweglich auf See.

Mit den in den vorgenannten Veröffentlichungen beschriebenen Technologien werden grundlegende Ansätze bereitgestellt, die für den Antrieb eines Wasserfahrzeugs mit einem aerodynamischen Profilelement, insbesondere einem Kite erforderlich sind. Ein grundsätzliches Problem, welches für eine wirtschaftliche Umsetzung des Antriebskonzepts von größeren Wasserfahrzeugen mit Hilfe von gefesselten, frei ausfliegenden aerodynamischen Profilelementen zu lösen ist, liegt darin, dass die für die Bereitstellung einer ausreichenden Antriebskraft erforderliche Größe des Profilelements eine Übernahme der aus dem Sportbereich bekannten Steuerungsabläufe nicht oder nur beschränkt ermöglicht. Insbesondere kann die Start- und Landetechnik kleinerer Kites nicht für die wesentlich größeren aerodynamischen Profilelemente übernommen werden, die für einen wirtschaftlichen Schiffsantrieb benötigt werden. Der Startvorgang und die Bergung der großen aerodynamischen Profilelemente stellt eine besondere Herausforderung für die Umsetzung des Antriebskonzepts dar.

Ein erstes hierin liegendes Problem besteht darin, dass die in Bodennähe herrschenden Windverhältnisse die Herstellung einer stabilen Fluglage des Profilelements erschweren, da die Windverhältnis oftmals zu schwach sind und überdies unkonstant hinsichtlich Stärke und Richtung. Hierdurch wird das Profilelement, je tiefer es fliegt, schwerer kontrollierbar.

Der Erfindung liegt die Aufgabe zu Grunde, das Antriebssystem so fortzubilden, dass ein sicherer Ablauf des Start und Bergungsvorgangs erreicht wird.

Ein weiteres Problem, das vor Start und nach Bergung des Profilelements auftritt, liegt darin, dass das Profilelement aus einer möglichst kompakten Verpackungsanordnung in die ausgeweitete Anordnung gebracht werden muss und umgekehrt. Dieser Vorgang wird typischerweise Entreffen und Reffen genannt.

Ein aerodynamisches Profilelement der eingangs genannten Art erstreckt sich dabei typischerweise im Wesentlichen in einer Querrichtung und ist dabei von der Mitte ausgehend zu den Enden in jeder Querrichtung hin um eine Längsachse, die senkrecht zur Querrichtung liegt, gewölbt. In Richtung der Längsachse erstreckt sich das Profilelement typischerweise um einen geringeren Betrag als in Querrichtung. Schließlich wird durch den Aufbau des Profilelements aus zwei parallel zueinander angeordneten Lagen eine Tiefenerstreckung erzielt, die senkrecht zu Quer- und Längsrichtung liegt und typischerweise einen Bruchteil der Erstreckung in Quer- und Längsrichtung beträgt. Im Längsschnitt ändert sich die Tiefenerstreckung typischerweise über die Länge des Profilelements und bildet einen Tragflächenquerschnitt mit einer oberen Unterdruckseite und einer unteren Überdruckseite aus, der zur Erzeugung von Auftrieb geformt ist.

Der Erfindung liegt gemäß eines weiteren Aspekts die Aufgabe zugrunde, ein Profilelement bereitzustellen, welches eine effiziente Entreffung und Reffung aus einem gepackten Zustand in einen ausgeweiteten Zustand und umgekehrt ermöglicht.

Ein weiteres Problem der Profilelemente mit großen Abmessungen liegt darin, die Kontur des Profilelements gezielt zu stabilisieren bzw. zu destabilisieren. Dies wird typischerweise durch Befüllen bzw. Entleeren des Innenraums des Profilelements mit Luft, vorzugsweise Luft unter Überdruck gegenüber der Atmosphäre, bewirkt. Gemäß eines noch weiteren Aspekts liegt der Erfindung die Aufgabe zugrunde, diese Stabilisierung und Destabilisierung des Profilelements auch für Profilelemente mit größeren Abmessungen in sicherer Weise zu bewerkstelligen.

Ein weiteres Problem, welches mit dem Start- und Bergungsvorgang zusammenhängt, liegt darin, dass die Kontrolle des Profilelements im bodennahen Bereich alleine mit Hilfe des Zugseils und entsprechender Steuermaßnahmen am Profilelement selbst nicht zuverlässig zu bewerkstelligen ist. Insbesondere ist die gezielte Ansteuerung einer Kopplungsvorrichtung auf diese Weise kaum möglich, wenn das Profilelement größere Abmessungen aufweist. Aus den vorgenannten Patentanmeldungen ist es bekannt, hierzu ein Führungsseil einzusetzen, das mit dem Profilelement verbunden ist und beim Start- bzw. Bergungsvorgang mit einer Start- und Bergevorrichtung verbunden werden kann, um das Profilelement zu führen. Mit Hilfe dieser Führungsvorrichtung kann zwar die Steuerung des Profilelements im bodennahen Bereich verbessert werden, jedoch ist die Handhabung des Profilelements durch das Erfordernis, das Zugseil, das Führungsseil und zusätzliche Reffleinen parallel und zeitlich zueinander abgestimmt zu holen bzw. zu fieren sehr aufwendig und die Steuerung dieser Vorgänge fehlerträchtig. Gemäß eines weiteren Aspekts liegt der Erfindung die Aufgabe zugrunde, die Steuerung des Profilelements in Bodennähe und insbesondere die Heranführung des Profilelements an die schiffsseitige Kopplungsvorrichtung zu vereinfachen.

Der Erfindung liegt weiterhin die Aufgabe zugrunde, die Flugsicherheit des Profilelements zu erhöhen, insbesondere im Hinblick auf andere im Luftbereich über dem angetriebenen Wasserfahrzeug fliegende Luftfahrzeuge.

Diese und andere Ziele werden mit der Erfindung wie definiert in unabhängigen Ansprüchen 1 und 15 erreicht. Gemäß eines ersten Aspekts der Erfindung wird ein aerodynamisches Profilelement der eingangs genannten Art bereitgestellt, welches fortgebildet ist durch ein sich in Längsrichtung des Profilelements erstreckendes Stabelement zur Stabilisierung des aerodynamischen Profils, wobei das Stabelement an der oberen und/oder unteren Lage und/oder an einem Steg befestigt ist und an dem Stabelement zumindest eine der Reffleinen aus einem sich in Querrichtung des Profilelements der oberen bzw. unteren Lage von dem Befestigungspunkt am ersten Ende erstreckenden Reffleinenabschnitt in einen sich in Längsrichtung erstreckenden Reffleinenabschnitt umgelenkt werden.

Die Reffleinen können dabei als im Wesentlichen in Längsrichtung steife, also nicht dehnbare Leine oder als in Längsrichtung über die gesamte Länge oder im Bereich einzelner Abschnitte elastische Leine ausgeführt sein.

Das erfindungsgemäße Profilelement weist ein Stabelement auf, welches sich in Längsrichtung erstreckt und somit die Kontur des Profilelements in Längsrichtung stabilisiert. Dieses Stabelement ist vorzugsweise in Querrichtung mittig und ebenfalls in Tiefenrichtung mittig zwischen der oberen und unteren Lage des Profilelements angeordnet. Am Stabelement werden die Reffleinen vorzugsweise mittels Umlenkrollen umgelenkt. Hierdurch wird ermöglicht, dass an einem stabilen Fixpunkt innerhalb des Profilelements eine Richtungsänderung der Reffleinen erfolgt, so dass die Reffleinen im Innenraum oder aber außerhalb des Profilelements in Längsrichtung oder einer Längs-Querrichtung vom Stabelement zu einem Befestigungspunkt an dem Profilelement geführt werden können. Nach Umlenkung am Stabelement können die Reffleinen in Längsrichtung entlang des Stabelements geführt werden und beispielsweise an der vorderen Kante aus dem Profilelement herausgeführt werden. Auf diese Weise wird eine geschickte und gegen unerwünschte Verschlingungen und Seilblockaden unempfindliche Führung erzielt und darüber hinaus die Bedienung der Reffleinen erleichtert.

Gemäß einer ersten Fortbildungsform ist es bevorzugt, dass sich das Stabelement nur über einen Teil der Länge der Lagen erstreckt, insbesondere nur über ein Drittel der Länge der Lagen. Diese Fortbildung ermöglicht es, dass das Profilelement aus einem ausgeweiteten Zustand mit einer großen Längserstreckung in einen Packungszustand gerefft wird, der auf eine Längserstreckung reduziert ist, die der Länge des verkürzten Stabelements entspricht und ermöglicht somit ein bezüglich der Länge erheblich verringertes Packungsmaß gegenüber einem Profilelement mit Stabelement über die gesamte Länge. Der Fortbildung liegt die Erkenntnis zugrunde, dass es durch die Umlenkung der Reffleinen am Stabelement und die Möglichkeit eines in Längs-Querrichtung ausgerichteten Verlaufs der Reffleinen nicht erforderlich ist, die Reffleinen exakt in Längsrichtung verlaufen zu lassen, sondern diagonal verlaufende Abschnitte die Reffung und Entreffung nicht behindern. Alternativ kann bei dieser Ausführungsform auch ein Verlauf der Reffleinen in Längsrichtung erfolgen, wobei die Reffleinen im hinteren Bereich des Profilelements zur Mitte geführt werden und dort in einem nicht durch das Stabelement stabilisierten Bereich in eine Querrichtung umgelenkt werden. Diese Reffleinen werden, wenn sie gerefft werden, eine umgehende Verkürzung des Profilelements in Längsrichtung bewirken, was für den Landevorgang oftmals vorteilhaft ist.

Weiterhin ist es bevorzugt, wenn sich wenigstens ein in Querrichtung der oberen bzw. unteren Lage erstreckende Reffleinenabschnitt zumindest in einem Abschnitt solcherart schräg zur Querrichtung verläuft, dass bei Zug an diesem Reffleinenabschnitt eine Reffung der Lagen in Quer- und Längsrichtung erfolgt. Durch diesen zumindest abschnittsweisen Diagonalverlauf der Reffleinen wird mit einer Reffleine sowohl eine Reffung in Längs- als auch in Querrichtung erzielt, was zu einer Reduktion der Anzahl der Reffleinen und einer daraus folgenden Vereinfachung des Reffvorgangs führen kann.

Dabei ist es insbesondere bevorzugt, diese Ausführungsform mit der Ausführungsform mit verkürztem Stabelement, insbesondere auf ein Drittel der Länge verkürztem Stabelement zu kombinieren, um hierdurch die durch die Verkürzung des Stabelements mögliche kompakte Verpackungsanordnung des Profilelements durch die diagonal verlaufenden Reffleinenabschnitte zu erzielen.

Das erfindungsgemäße Profilelement kann weiter fortgebildet werden durch zumindest zwei am Profilelement befestigte Reffleinenabschnitte, die miteinander verbunden sind und über eine an den Reffleinenabschnitten laufende Rolle, an der eine gemeinsame Reffleinenfortführung befestigt ist, gerefft und entrefft werden. Auf diese Weise wird eine Art Seilwaage in die Reffleinen eingesetzt. Mit der solcherart ausgestalteten Seilwaage kann eine variable Reffung von zwei am Profilelement befestigten Reffleinen erzielt werden, bei der an einer Reffleinenfortführung zur Reffung gezogen wird und diese Zugkraft über die Seilwaage solcherart auf die zwei Reffleinenabschnitte übertragen wird, dass bei temporärem erhöhtem Widerstand in einem der Reffleinenabschnitte nur der entsprechend andere Reffleinenabschnitt eingeholt wird, so dass die Gefahr des Reißens der Reffleinen verringert werden kann.

Dabei ist es insbesondere bevorzugt, mehrere solcher Seilwaagen vorzusehen, insbesondere können die Seilwaagen in einer kaskadierten Anordnung vorgesehen werden, d.h. es werden zwei Reffleinenfortführungen wiederum in der Art der Reffleinenabschnitte miteinander verbunden und über eine Seilwaage an eine Fortführung der Reffleinenfortführung gekoppelt u.s.w.

Gemäß eines weiteren Aspekts der Erfindung wird das eingangs genannte oder die zuvor beschriebenen Profilelemente fortgebildet, indem ein zentrales Reffseil, mit dessen ersten Ende alle zweiten Enden der Reffleinen verbunden sind, vorgesehen ist, wobei sich das zentrale Reffseil oder das zweite Ende der Reffleinen in einer in Bezug auf die Querrichtung des Profilelements in der Symmetrieachse liegenden Richtung dieser Symmetrieachse aus der vorderen Kante des Profilelements erstreckt/erstrecken und das zentrale Reffseil so mit seinem zweiten Ende lösbar zwischen dem ersten und zweiten Ende des zentralen Zugseils befestigt ist, dass es als Führungsseil für den Startvorgang und die Bergung des Profilelements dienen kann.

Durch diese Fortbildung wird es ermöglicht, auf das nach dem Stand der Technik erforderliche separate Führungsseil zu verzichten. Stattdessen kann die in Bodennähe erforderliche Führung des Profilelements über das zentrale Reffseil erfolgen. Diesem Aspekt der Erfindung liegt die Erkenntnis zugrunde, dass bei Bergen des Profilelements typischerweise bis zur Ankopplung des Profilelements an die schiffsseitige Kopplungsvorrichtung einerseits ein durch die Füllung des Innenraums des Profilelements verursachten Widerstand gegen Reffung vorliegt, der die Führung mittels des zentralen Reffseils ermöglicht, ohne dass eine unerwünschte übermäßige Reffung stattfindet und andererseits eine gezielte Reffung des Profilelements beim Bergevorgang oftmals auch vor der Ankopplung an die schiffsseitige Kopplungsvorrichtung vorteilhaft ist und somit, selbst wenn sie bei Führung des Profilelements über das zentrale Reffseil erfolgt, begünstigend in Kauf genommen werden kann.

Das zentrale Reffseil kann dabei mittels einer Kopplungsvorrichtung mit dem Zugseil lösbar gekoppelt sein. Die Kopplungsvorrichtung kann an einer fixierten Position am Zugseil angekoppelt sein, vorzugsweise ist die Kopplungsvorrichtung so ausgeführt, dass das zweite Ende solcherart am Zugseil befestigt ist, dass es entlang des Zugseils gleiten kann.

Das vorgenannte Profilelement kann weiter fortgebildet werden, indem eine Seilklemmvorrichtung im Bereich des Profilelements bereitgestellt wird, die ausgebildet ist, um das zentrale Reffseil oder die Reffleinen lösbar zu klemmen. Mittels dieser Seilklemmvorrichtung kann eine versehentliche Reffung oder Entreffung des Profilelements in der Phase verhindert werden, in der das Profilelement mittels des zentralen Reffseils geführt wird, indem die Reffleinen oder das zentrale Reffseil im Bereich des Profilelements blockiert wird.

Dabei ist es besonders bevorzugt, wenn das Profilelement ein sich in Längsrichtung erstreckendes Stabelement aufweist und die Seilklemmvorrichtung bei Zug am zentralen Reffseil selbstklemmend ist, am Stabelement im Bereich der vorderen Kante des Profilelements befestigt ist und mit Betätigungsmitteln gekoppelt ist, welche ein Öffnen der Seilklemmvorrichtung ermöglichen. Mit dieser Fortbildung wird es ermöglicht, die Seilklemmung der Reffleinen bzw. des zentralen Reffseils von außen zu steuern. So kann beispielsweise die Seilklemmung in dem an die schiffsseitige Kopplungsvorrichtung angekoppelten Zustand aufgehoben werden, so dass bis zur Ankopplung bzw. unmittelbare nach Entkopplung die Klemmung greift und somit eine versehentliche Entreffung/Reffung verhindert wird, nach Ankopplung bzw. vor Entkopplung jedoch die Reffung bzw. Entreffung des Profilelements im angekoppelten Zustand möglich ist. Insbesondere kann vorgesehen werden, dass die Betätigungsmittel automatisch bei Ankopplung an die schiffsseitige Kopplungsvorrichtung betätigt werden, so dass die Klemmung automatisch aufgehoben wird.

Gemäß eines weiteren Aspekts wird erfindungsgemäß ein Profilelement der eingangs oder zuvor beschriebenen Art bereitgestellt, bei dem der Innenraum zumindest eine Entlüftungsöffnung und eine Verschlussvorrichtung zum variablen Verschließen der zumindest einen Entlüftungsöffnung aufweist.

Diesem Aspekt der Erfindung liegt die Erkenntnis zugrunde, dass bei Profilelementen mit größeren Abmessungen die Reffung insbesondere dadurch behindert wird, dass die im Innenraum angeordnete Luft nicht in der erforderlichen Weise entweichen kann. Um diesem Nachteil zu begegnen, zugleich aber die Flugeigenschaften und die Profilstabilität des Profilelements nicht zu verschlechtern, wird die variabel verschließbare Entlüftungsöffnung bereitgestellt. Auf diese Weise kann bei gewünschter Reffung des Profilelements die Entlüftungsöffnung geöffnet werden und auf diese Weise eine beschleunigte Ableitung der im Innenraum befindlichen Luft erreicht werden, im Flugzustand die Entlüftungsöffnung jedoch geschlossen gehalten werden, wodurch das Profil des Profilelements stabilisiert wird.

Dabei ist es insbesondere bevorzugt, wenn die Entlüftungsöffnung als länglicher Schlitz ausgeführt ist, dass entlang zumindest einer Öffnungskante, vorzugsweise entlang beiden Öffnungskanten der Entlüftungsöffnung, jeweils ein elastisch verformbares Stabelement befestigt ist, an dessen beiden Enden ein Öffnungsseil solcherart befestigt ist, dass bei Zug an dem Öffnungsseil das Stabelement elastisch gekrümmt wird und hierdurch die Entlüftungsöffnung geöffnet wird. Mit dieser Fortbildung wird eine spezifische Konstruktion bereitgestellt, die einerseits die Anforderungen an den Leichtbau des Profilelements erfüllt und andererseits eine zuverlässige Öffnung und Schließung der Entlüftungsöffnung ermöglicht. Dabei kann das Stabelement in verschiedener Weise entlang der Längskanten des Schlitzes befestigt und gegebenenfalls die Stabelemente auch aneinander befestigt sein, beispielsweise können die Stabelemente an ihren Enden gelenkig oder starr miteinander gekoppelt sein, so dass eine ellipsenförmige oder linsenförmige Öffnung erzielt wird, wenn zwei Stabelemente in beiden Längskanten des Schlitzes angeordnet sind.

Bei den Ausführungsformen mit Entlüftungsöffnung ist es besonders bevorzugt, wenn die Entlüftungsöffnung in einem Bereich angeordnet ist, der im Flugzustand des Profilelements in einem Unterdruckbereich außerhalb des Profilelements liegt, insbesondere im Bereich zwischen den hinteren Kanten der Lagen oder in der oberen Lage. Diese Anordnung der Entlüftungsöffnungen bewirkt eine besonders schnelle Ableitung der im Innenraum befindlichen Luft und kann somit insbesondere bei Profilelementen mit großen Abmessungen die Reffung erheblich beschleunigen.

Gemäß eines weiteren Aspekts der Erfindung wird ein eingangs oder zuvor beschriebenes Profilelement dadurch fortgebildet, dass der Bereich zwischen den vorderen Kanten der oberen und unteren Lage um die Mittellängsachse des Profilelements mehrere Belüftungsöffnungen aufweist und im äußeren Bereich verschlossen ist. Es hat sich gezeigt, dass, entgegen der Gestaltung von Kites im kleineren Maßstab, die Aerodynamik und Flugstabilität von Kites mit größeren Abmessungen dadurch verbessert werden kann, dass die Öffnungen der vorderen Kante des Kites bzw. des Profilelements nur einen Teilabschnitt dieser Längskante einnehmen, insbesondere einen um die Mittellängsachse angeordneten Teilabschnitt, wohingegen andere Bereiche und insbesondere der überwiegende Teil der vorderen Längskante verschlossen ist.

Dabei ist es insbesondere bevorzugt, wenn die Belüftungsöffnungen 10-30%, vorzugsweise 30% der vorderen Windangriffsfläche, also der Stirnfläche bzw. Flügelvorderkante des aerodynamischen Profilelements einnehmen.

Weiterhin ist es bevorzugt, wenn die Belüftungsöffnungen mittels Latten aufgehalten werden. Dabei kann die Gestaltung dieser mittels Latten aufgehaltener Belüftungsöffnungen sich beispielsweise an der Gestaltung der zuvor beschriebenen Entlüftungsöffnungen orientieren oder auf mehrere miteinander gekoppelte Stabelemente zurückgreifen, die entlang der Öffnungsränder der Belüftungsöffnungen angeordnet sind.

Gemäß eines weiteren Aspekts der Erfindung wird ein Profilelement der eingangs oder zuvor beschriebenen Art fortgebildet, indem am Zugseil zumindest eine, vorzugsweise mehrere Signalvorrichtungen angeordnet sind, vorzugsweise selbstleuchtende Signalelemente. Auf diese Weise kann sichergestellt werden, dass andere Luftfahrzeuge das sich vom Profilelement zum Schiffsfahrzeug erstreckende Zugseil nicht übersehen und somit die Betriebssicherheit des Gesamtsystems erhöht werden. Insbesondere für den Betrieb bei Nacht ist es dabei bevorzugt, selbstleuchtende Signalelemente zu verwenden, d.h. Signalelemente, die mit einer Energiequelle gekoppelt sind und hierdurch Licht erzeugen.

Dabei kann insbesondere vorgesehen werden, dass die Signalvorrichtungen wechselweise in einem Abstand von etwa 100 Metern am Zugseil befestigte rote und weiße Signalelemente aufweisen, vorzugsweise selbstleuchtende Rundumlichter.

Für den Fall, dass die Signalmittel selbstleuchtend sind, ist es bevorzugt, zur Energieversorgung die Signalmittel induktiv an eine im Zugseil verlaufende stromführende Leitung anzukoppeln. Diese Art der Energieversorgung ist einerseits besonders zuverlässig und nutzt dabei andererseits die oftmals für Steuerungsvorgänge am Profilelement, insbesondere in einer unterhalb des Profilelements angeordneten Gondel ohnehin erforderliche Übertragung von elektrischer Energie über das Zugseil.

Gemäß eines weiteren Aspekts der Erfindung wird die eingangs genannte Start- und Bergevorrichtung fortgebildet, indem die Kopplungsvorrichtung einen von zwei sich vertikal erstreckenden Seitenwänden begrenzten Aufnahmeraum umfasst, in dem das vordere Ende des Stabelements aufgenommen werden kann und der zu einer ersten horizontalen Rückseite durch eine Anschlagwand begrenzt ist, und zu einer dieser gegenüberliegenden zweiten horizontalen Vorderseite und nach oben hin offen ist zum Einführen des vorderen Endes des Stabelements von seitlich oder oben.

Die solcherart bereitgestellte Kopplungsvorrichtung geht von der bisherigen Auffassung ab, dass ein besonders sicherer Start und eine besonders sichere Bergung des Profilelements insbesondere dann ermöglicht wird, wenn das Profilelement in einer fixierten und definierten Lage gehalten wird. Vielmehr liegt dieser Fortbildung die Erkenntnis zugrunde, dass die Belastungen auf die einzelnen Bauteile des Gesamtsystems, insbesondere auf das Stabelement des Profilelements erheblich verringert werden können, wenn eine gewisse Beweglichkeit des Profilelements auch im angekoppelten Zustand ermöglicht wird.

Weiterhin erlaubt die so fortgebildete Start- und Bergevorrichtung, den Start und die Bergung des Profilelements in einer Vielzahl von Fluglagen und Flugrichtungen des Profilelements durchzuführen. Durch die nach oben und nach vorne offene Gestaltung des Aufnahmeraums kann das Stabelement sowohl von oben als auch nach vorne angekoppelt bzw. ausgekoppelt werden. Dies ist für eine Reihe von Start- und Bergemanövern vorteilhaft.

Der Aufnahmeraum wird dabei vorzugsweise von Seitenwänden begrenzt, die vorzugsweise nach Art eines Trichters ausgeformt sind, um das Bergen des Profilelements und die damit verbundene Einführung des Stabelements in den Aufnahmeraum zu erleichtern.

Gemäß einer ersten vorteilhaften Ausführungsform kann die erfindungsgemäße Start- und Bergevorrichtung fortgebildet werden, indem die Kopplungsvorrichtung eine horizontale Achse umfasst, um welche das Stabelement im angekoppelten Zustand verschwenken kann. Durch diese Fortbildung wird eine definierte Verschwenkung des Profilelements, insbesondere des Stabelements, erzielt. Die horizontale Achse kann dabei gegenständlich als Bauteil innerhalb der Kopplungsvorrichtung realisiert sein oder aber durch Zusammenwirken von Hebeln und dergleichen als virtuelle Achse realisiert werden.

Dabei ist es besonders bevorzugt, wenn die Achse mit einem Federelement und/oder einem Dämpferelement gekoppelt ist zur elastischen Rückstellung des angekoppelten Stabelements in eine Sollwinkelausrichtung bzw. zur Dämpfung der Schwenkbewegung des Stabelements. Es hat sich gezeigt, dass die freie Beweglichkeit für einen kontrollierten Start- und Bergevorgang vorzugsweise einerseits solcherart beschränkt werden sollte, dass keine großen Beschleunigungen und hohen Geschwindigkeiten dieser Verschwenkung erreicht werden und andererseits eine Rückstellkraft in eine gewünschte Solllage aufgebracht wird. Dies kann mit Hilfe der Fortbildung mit Dämpfung und elastischer Rückstellung erzielt werden.

Die erfindungsgemäße Start- und Bergevorrichtung kann weiter fortgebildet werden durch eine Verriegelungsvorrichtung zum Verriegeln des Stabelements in einer vertikal ausgerichteten Winkellage. Dies ermöglicht es, beispielsweise nach vollständiger Reffung des Profilelements, die Winkelausrichtung des Stabelements zum Mast in einer fixierten Lage zu halten und hierdurch ein unerwünschtes Verschwenken in einer vertikalen Ebene zu verhindern.

Dabei kann die Verriegelungsvorrichtung insbesondere ein horizontal verfahrbares Verschlusselement umfassen, welches den oberen Öffnungsbereich des Aufnahmeraums in einer Verriegelungsanordnung verschließt und in einer Entriegelungsanordnung freigibt.

Gemäß einer weiteren bevorzugten Ausführungsform kann die Start- und Bergevorrichtung fortgebildet werden, indem am Mastkopf, insbesondere an der Kopplungsvorrichtung zumindest eine Abdeckklappe angeordnet ist zum Abdecken der Belüftungsöffnung(en) des Profilelements, wenn das Stabelement an den Mastkopf gekoppelt ist. Durch diese Abdeckklappe wird verhindert, dass dann, wenn sich das Profilelement im Bereich des Mastkopfs befindet oder am Mastkopf angekoppelt ist, der durch die Belüftungsöffnungen des Profilelementes bewirkte Staudruck im Inneren des Profilelements das Profil weiter stabilisiert und somit die Reffung erschwert. Dabei kann insbesondere vorgesehen sein, dass für jede der Belüftungsöffnungen des Profilelements eine Abdeckklappe vorgesehen ist, die sich vorzugsweise in gleicher Weise wie die Kopplungsvorrichtung um eine vertikale Achse des Mastkopfs und gegebenenfalls eine horizontale Achse drehen können, um in jedem Kopplungszustand vor den Belüftungsöffnungen angeordnet zu sein.

Der Mast kann, um nach erfolgtem Start den Betrieb des angetriebenen Wasserfahrzeugs nicht zu behindern, um zumindest eine Achse klappbar ausgebildet sein, um ihn vollständig oder zumindest einen Teil seiner Höhe umzuklappen und seine Höhe zu reduzieren. Gemäß einer weiteren Fortbildungsform der Start- und Bergevorrichtung ist der Mast alternativ oder zusätzlich zur vorgenannten Klappmöglichkeit teleskopartig aus- und einfahrbar. Hierdurch kann auf zuverlässige Weise die für Profilelemente mit größerem Ausmaß erforderliche Starthöhe erreicht werden, ohne dass den sonstigen Schiffsbetrieb störende, großbemessene Mastvorrichtungen installiert werden müssen.

Ein weiterer Aspekt der Erfindung ist eine Antriebsvorrichtung für ein Schifffahrzeug mit einem Profilelement und einer Start- und Bergevorrichtung der zuvor beschriebenen Art, bei welcher der Mast im Bugbereich des Schiffes angeordnet ist und das Zugseil an einem Holepunkt im Bugbereich des Schiffes angelenkt ist, der in Fahrtrichtung ca. ein Drittel der Länge des Profilelements vor dem Mast angeordnet ist. Es hat sich gezeigt, dass der Holepunkt, d.h. der Ort, an dem das Zugseil am Wasserfahrzeug befestigt ist bzw. zu einer Befestigungsstelle umgelenkt wird, vorzugsweise in einem bestimmten Verhältnis von einem Drittel zur Länge des Profilelements von dem Mastverankerungspunkt auf dem Wasserfahrzeug angeordnet ist. Dabei wird davon ausgegangen, dass sich der Mast senkrecht erstreckt. Diese Beabstandung ermöglicht sowohl einen sicheren Startvorgang als auch einen sicheren Bergevorgang, da weder beim Starten noch beim Bergen größere Führungskräfte über den Mastkopf auf das Profilelement übertragen werden, sondern das Zugseil des freifliegenden, gefesselten Profilelements im Wesentlichen bei entsprechender Einholung des Zugseils das Profilelement in einem passenden Abstand zum Mastkopf hält.

Bevorzugte Ausführungsformen der Erfindung werden anhand der anhängenden Figuren beschrieben. Es zeigen:
Figur 1 eine Frontalansicht mit Skizzierung der Zugleinenführung eines erfindungsgemäßen Kites,
Figur 2 eine Seitenansicht des Kites gemäß Figur 1,
Figur 3 eine schematische Darstellung des Kites mit Gondel- und Reffleinenführung von schräg vorne oben,
Figur 4 eine schematische Darstellung der Reffleinenführung,
Figur 5 eine schematische Seitenansicht der Klemmmechanik der Führungsleine im vorderen Kitestickbereich,
Figur 6 eine schematische Darstellung der Funktion der Klemme für die Reffleinen,
Figuren 7a und 7b eine schematische Darstellung des Funktionsprinzips der variabel verschließbaren Entlüftungsöffnungen in einer geöffneten Stellung (a) und einer geschlossenen Stellung (b),
Figur 8 eine Ansicht des Mastkopfes zur Kopplung des Kites an ein Wasserfahrzeug von vorne oben,
Figur 9 eine Ansicht des Mastkopfes von unten hinten,
Figur 10 eine schematische Darstellung des Berge- und Startvorgangs des Kites zum bzw. vom Mastkopfs,
Figur 11 eine schematische Darstellung einer weiteren Ausführungsform des Mastkopfes mit daran angepasstem Kite,
Figur 12 eine teilgeschnittene Seitenansicht des Mastkopfes mit eingesetztem Kitekopf in Teilansicht in einer verriegelten und einer nicht-verriegelten Stellung,
und
Figuren 13a-c eine perspektivische Ansicht von schräg vorne oben der Mechanik für die Vertikal- und Horizontalverschränkung der Kopplungsvorrichtung im Mastkopf.

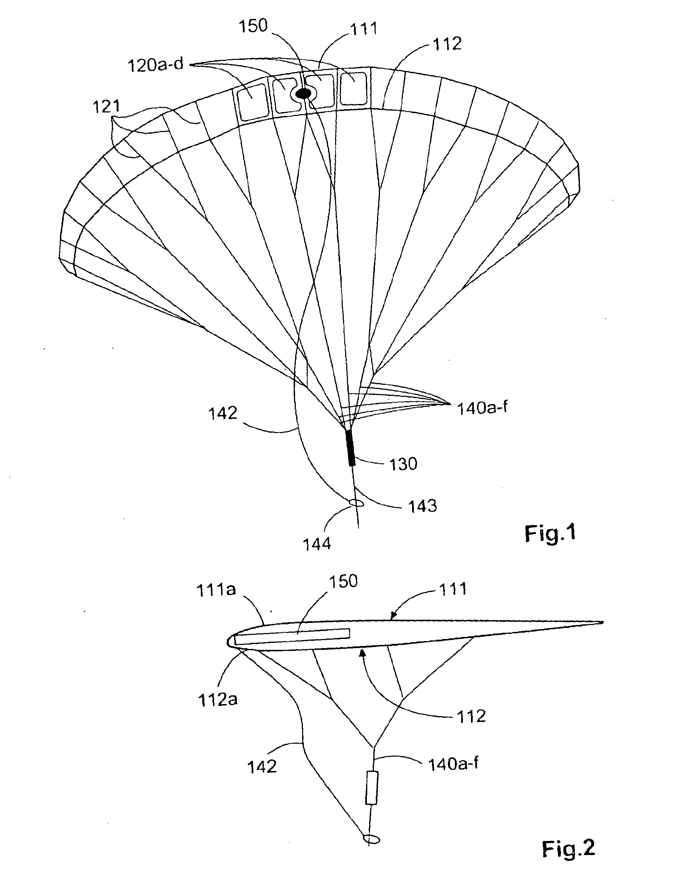

Bezug nehmend auf die Figuren 1 und 2 umfasst ein aerodynamisches Profilelement in Form eines Kites 100 gemäß der Erfindung eine erste obere Lage 111 und eine zweite untere Lage 112. In der Frontalansicht gemäß Figur 1 können zwischen den vorderen Kanten 111a und 112a vier Öffnungen 120a-d erkannt werden, welche den Innenraum zwischen der oberen und unteren Lage 111, 112 belüften. Die Öffnungen sind um die Horizontallängsachse des Kites angeordnet. Im äußeren Bereich zwischen den vorderen Längskanten 111a, 112a sind keine Öffnungen vorhanden.

Die oberen und unteren Lagen sind mittels mehrerer Stege 121 miteinander verbunden. Der solcherart zusammengesetzte Verbund aus oberer, unterer Lage und Stegen ist mittels mehrerer Zugleinen mit einer Gondel 130 verbunden. Dabei sind an dem Kite eine Vielzahl von Zugleinen befestigt, die in Richtung der Gondel so weit zu Gemeinschaftszugleinen zusammengefasst werden, bis lediglich sechs einzelne Zugleinen an der Gondel zu befestigen sind.

Wie aus Figur 2 zu erkennen, ist das Profilelement auch in Längsrichtung mittels mehrerer Zugleinen mit der Gondel verbunden, die in gleicher Weise so weit zusammengefasst werden, wie dies zuvor für die in Querrichtung verteilten Zugleinen gemäß Figur 1 beschrieben worden ist.

Ein steifes Stabelement in Form eines Kitesticks 150 ist entlang der Mittellängsachse des Kites befestigt zwischen der oberen und unteren Lage 111, 112. Der Kitestick 150 erstreckt sich etwa über ein Drittel der Gesamtlänge des Kites. Am Kitestick 150 ist eine Führungsleine 142 geführt, deren Funktion im Folgenden näher beschrieben wird.

Die Gondel 130 ist mit einem Zugseil 143 verbunden, welches die Gondel und somit das Profilelement mit einem Wasserfahrzeug verbindet, welches mit Hilfe des Kites 110 anzutreiben ist. Die Führungsleine 142 ist verschieblich mittels eines lösbaren Schieberings 144 am Zugseil 143 geführt.

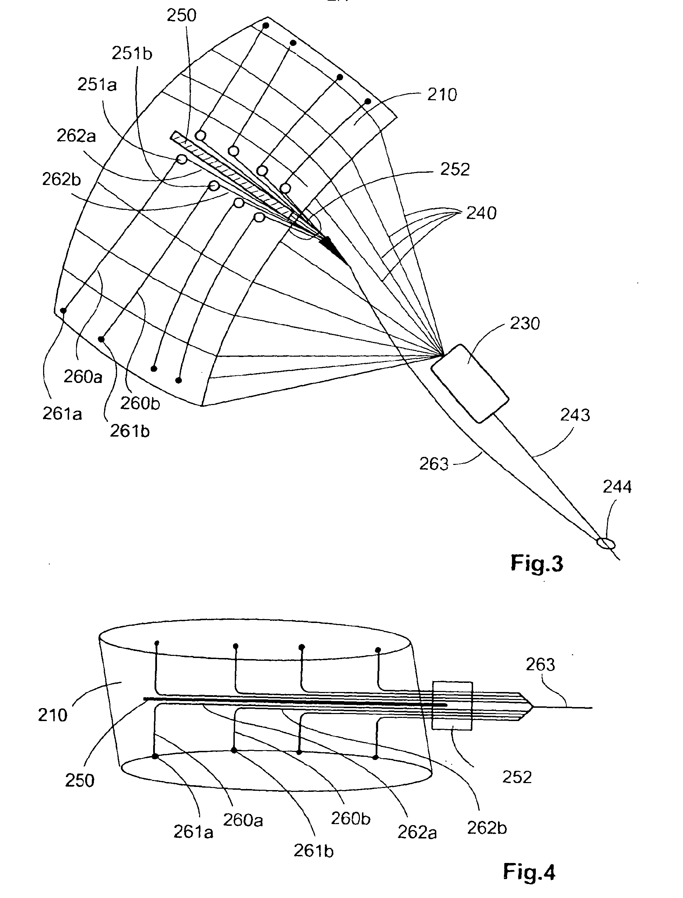

Figuren 3 und 4 zeigen schematisch die Anordnung und den Verlauf von Reffleinen zum Reffen und Entreffen des Kites. Ein schematisch dargestellter Kite 210 ist mittels mehrerer Zugleinen 240 mit einer Gondel 230 verbunden, die die Zugkraft des Kites über ein zentrales Zugseil 243 auf ein Wasserfahrzeug übertragen kann.

Innerhalb des Kites verlaufen mehrere Reffleinen, die jeweils einen sich in Querrichtung des Kites erstreckenden Abschnitt 260a, b aufweisen. Dieser Reffleinenabschnitt 260a, b ist an einem äußeren Befestigungspunkt 261a, b am äußeren Rand des Kites befestigt. Jeder Reffleinenabschnitt 260a, b wird mit Hilfe einer Umlenkrolle 251a, b, die an einem entlang der Mittelängsachse des Kites befestigten Kitesticks 250 befestigt ist, in einen in Längsrichtung verlaufenden Reffleinenabschnitt 262a, b umgelenkt. Diese in Längsrichtung verlaufenden Reffleinenabschnitte 262a, b erstrecken sich zu einem am vorderen Ende des Kitesticks, befestigten Kitekopf 252.

Alle Reffleinenabschnitte 262a, b werden in diesem Ausführungsbeispiel außerhalb des Kites mit einem zentralen Reffseil 263 verbunden. Das zentrale Reffseil 263 stellt bei der abgebildeten Ausführungsform zugleich das Führungsseil dar und ist mit Hilfe eines lösbaren Ringelements 244 am Zugseil 243 geführt.

Wie aus den Figuren 3 und 4 ersichtlich, verlaufen die Reffleinenabschnitte 260a, b nicht notwendigerweise exakt in Längsrichtung des Kites 210, sondern können sich auch in einer Längsquerrichtung erstrecken. So wird beispielsweise die Reffleine 260a am hinteren Ende des Kitesticks 250 umgelenkt und ist im hinteren Eckbereich mittels des Befestigungspunktes 261 a am Kite 210 befestigt. Da sich der Kitestick 250 jedoch nicht über die volle Länge des Kites 210 erstreckt, sondern in der abgebildeten Ausführungsform nur etwa zwei Drittel dieser Länge einnimmt, verläuft der Reffleinenabschnitt 260a schräg von innen nach außen hinten. Mit Hilfe des Reffleinenabschnitts 260a kann somit eine Reffung in Längsrichtung und zusätzlich ein Reffungsanteil in Querrichtung erzielt werden, wenn diese Reffleine 260a eingeholt wird.

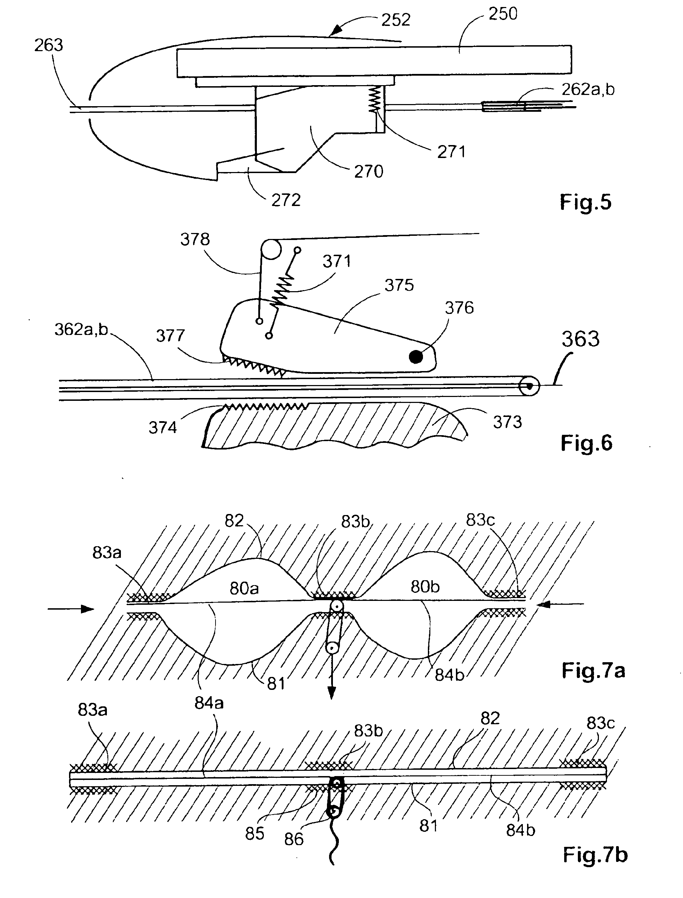

Figur 5 zeigt eine Klemmvorrichtung im Bereich eines Kitekopfes. Wie ersichtlich, werden bei der abgebildeten Reffseil- und Reffleinenstellung nicht die Reffleinen, sondern das Reff- und Führungsseil durch den Kitekopf geführt, entgegen den Abbildungen in Figuren 3 und 4.

Die Zugleine 263 ist im Bereich des Kitekopfes durch eine Klemmvorrichtung 270 geführt, die am Kitestick 250 befestigt ist. Die Klemmvorrichtung 270 ist so ausgeführt, dass sie sowohl die Zugleine 263 als auch die Reffleinen 262a, b klemmen kann, je nach dem, wie weit der Kite 210 gerefft ist und folglich die Stellung der Reff-/Führungsleine 263 und der Reffleinen 262a, b zu der Klemme ist.

Die Klemme 270 umfasst eine Spannfeder 271, welche die Klemme in einem Klemmzustand hält. D.h., im normalen Flugzustand ist die Klemme geschlossen und somit ein Herausziehen des Reff-/Führungsseils 263 aus dem Kitekopf nicht möglich. Auf diese Weise kann im normalen Flugzustand das Reff-/Führungsseil 263 dazu genutzt werden, den Kite zu führen, ohne dass hierdurch eine unerwünschte Reffung des Kites bewirkt wird.

Die Klemme kann durch manuelle oder automatische Betätigung eines Hebels 272 geöffnet werden. Wie im Weiteren im Detail erklärt, kann dieser Hebel insbesondere automatisch betätigt werden, wenn der Kitekopf an einen Mastkopf am Wasserfahrzeug angekoppelt wird.

Bei Betätigung des Hebels 272 wird die Klemme 270 freigegeben und das Reff-/Führungsseil 263 kann aus dem Kitekopf gezogen werden. Auf diese Weise können die Reffleinen 262a, b durch die Klemme aus dem Kite herausgezogen werden und der Kite auf diese Weise gerefft werden. Sobald die Reffung vollständig ist, kann der Hebel 272 wiederum gelöst werden und der Reffzustand auf diese Weise durch Klemmung fixiert werden.

Figur 6 zeigt eine alternative Ausführungsform der Klemmvorrichtung für die Reffleinen bzw. das Reff-/Führungsseil.

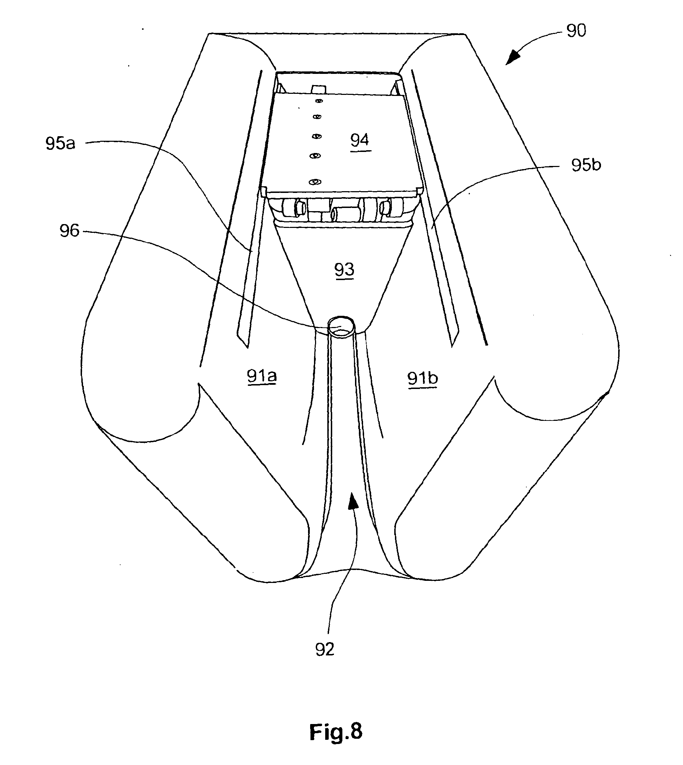

Die Klemmvorrichtung gemäß Figur 8 umfasst eine feste Gegenfläche 373, die mit einer Vielzahl von Rippen 374 versehen ist, die die Reibung zu den Reffleinen bzw. zum Reff-/Führungsseil 362a, b, 363 erhöhen.

Gegenüberliegend zur festen Gegenfläche 373 ist ein schwenkbarer Klemmkörper 375 angeordnet, der in einem Drehgelenk 376 schwenkbar gelagert ist. Der Klemmkörper 375 wird mittels einer Druckfeder 371 in die Klemmhaltung gedrückt und weist ebenfalls an der zum Reff-/Führungsseil bzw. zu den Reffleinen weisenden Klemmfläche eine Vielzahl von Rippen 377 auf, welche die Reibung erhöhen.

Benachbart zum Anlenkpunkt der Druckfeder 371 am Klemmhebel 375 ist eine Klemmlösungsleine 378 am Klemmkörper befestigt. Die Klemmlösungsleine 378 wird umgelenkt und parallel zu den Reffleinen 363a, b aus dem Kitekopf herausgeführt. Durch Zug an der Klemmlösungsleine 378 kann der Klemmkörper 375 aus der Klemmstellung herausgeschwenkt werden und folglich die Reffleinen 362a, b freigegeben werden, um die Reffung durchzuführen. Diese Ausführungsform hat den Vorteil, dass eine Aufhebung der Klemmwirkung auch durch Fernbetätigung möglich ist, beispielsweise dann, wenn eine Reffung gewünscht ist und der Kitekopf nicht an einem Mastkopf angekoppelt ist.

Die Figuren 7a und 7b zeigen schematisch eine Entlüftungsöffnung 80a, b zum Entlüften des Innenraums des Kites, die variabel geöffnet und geschlossen werden kann.

Wie gut aus Figur 7b zu erkennen, ist die Entlüftungsöffnung als Längsschlitz ausgeführt und weist zwei parallel zueinander verlaufende Längskanten 81, 82 auf. In die Längskanten 81, 82 sind flexible Latten eingesetzt. Die Latten sind an drei Punkten 83a-c fest miteinander verbunden.

Parallel zu den Latten verläuft zwischen dem Fixpunkt 83a und dem Fixpunkt 83b eine Öffnungsleine mit einem ersten Öffnungsleinenabschnitt 84a, der über eine Umlenkrolle 85 um 90° umgelenkt wird und zu einer Umlenkrolle 86 geführt wird.

An der Umlenkrolle 86 wird der erste Öffnungsleinenabschnitt 84a um 180° umgelenkt, so dass er zur Umlenkrolle 85a zurückläuft. Der zurücklaufende Leinenabschnitt ist Bestandteil eines zweiten Öffnungsleinenabschnitts 82b, der wiederum an der Umlenkrolle 85 um 90° umgelenkt wird und sich dann zwischen den Fixpunkten 83b und 83c erstreckt.

Der erste Öffnungsleinenabschnitt 84a ist im Fixpunkt 83a befestigt und der zweite Öffnungsleinenabschnitt 84b ist im Fixpunkt 83c befestigt, so dass der erste und zweite Öffnungsleinenabschnitt 84a, b gemeinsam eine an den Umlenkrollen 85, 86 umgelenkte Leinenverbindung zwischen dem Fixpunkt 83a und dem Fixpunkt 83c darstellen.

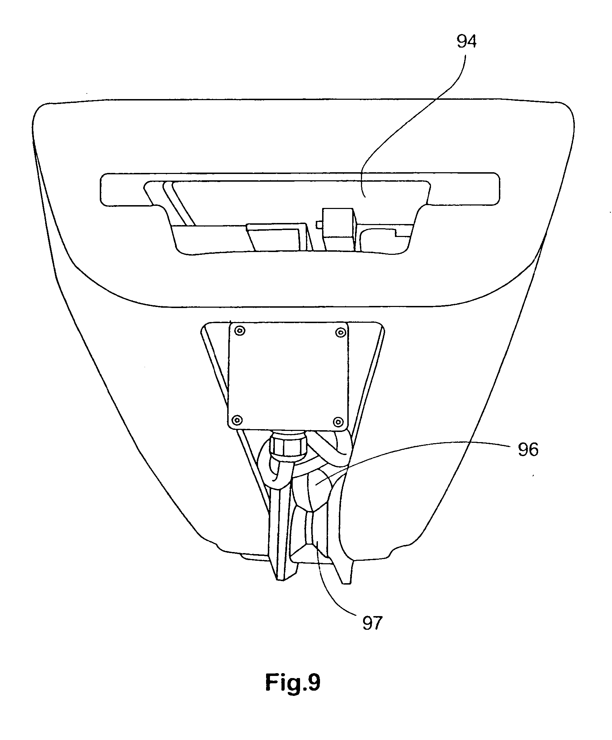

Die zweite Umlenkrolle 86 ist mit einem Öffnungszugseil 87 verbunden. In Figur 9b ist dieses Öffnungszugseil 87 nicht gespannt. Wird das Öffnungszugseil 87 gespannt, wie in Figur 7a durch einen Pfeil am Öffnungszugseil angedeutet, so werden die Öffnungsleinenabschnitte 84a, b ebenfalls gespannt und folglich die Fixpunkte 83a, c in Richtung des Fixpunkts 83b gezogen. Die Latten 81, 82 werden hierdurch verformt und bilden eine Acht-förmige Öffnung 80a, b aus, durch welche die im Innenraum des Kites befindlich Luft ausströmen kann.

Die Figuren 8 und 9 zeigen eine Kopplungsvorrichtung, die im Bereich eines Mastkopfes an der Spitze eines Mastes befestigt werden kann, der auf einem Wasserfahrzeug montiert ist. Der Mast, Mastkopf und die Kopplungsvorrichtung dienen dazu, den Start- und Bergevorgang des Kites zu erlauben. Nach erfolgtem Start wird die Zugseilkraft des Kites über einen beabstandet vom Mast angeordneten Holepunkt übertragen und der Mast ist während des normalen Fahrbetriebs ohne Funktion, so dass er beispielsweise teleskopartig aufgebaut sein kann und dann eingefahren werden kann.

Figur 8 zeigt die Kopplungsvorrichtung von oben vorne. Wie erkannt werden kann, umfasst die Kopplungsvorrichtung 90 ein Gehäuse, welches Seitenwände 91a, b aufweist, die einen Aufnahmeraum seitlich begrenzen. Der Aufnahmeraum ist nach oben und nach vorne offen. Nach hinten ist der Aufnahmeraum 92 durch eine Anschlagwand 93 begrenzt. Die Seitenwände 91a, b laufen von oben nach unten zusammen, so dass in dieser Richtung eine Trichterform ausgebildet ist. Des Weiteren sind die Seitenwände 91a, b an den vorderen und oberen Kanten abgerundet. Sowohl diese Abrundung als auch die konisch zulaufende Anordnung der Seitenwände 91 a, b erleichtert das Einführen eines Kitekopfes in den Aufnahmeraum 92.

Im hinteren Bereich ist hinter der Anschlagwand 93 die Horizontal- und Vertikalverschwenkungsmechanik der Kopplungsvorrichtung angeordnet. Diese wird im Folgenden noch im Detail beschrieben werden.

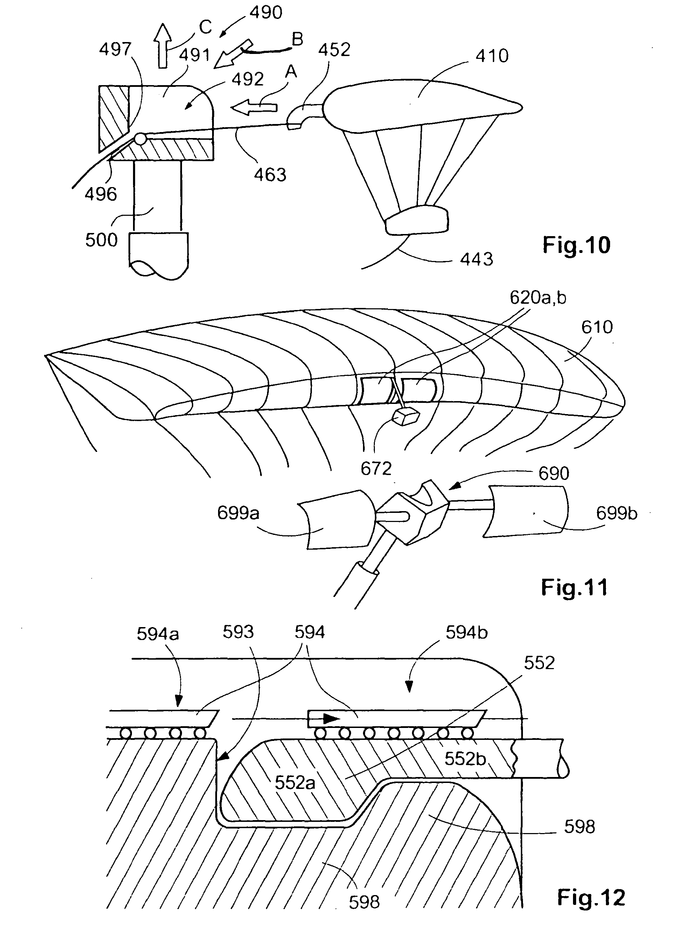

Oberhalb der Horizontal- und Vertikalverschwenkungsmechanik ist eine Verriegelungsplatte 94 angeordnet, die in Führungsschienen 95a, b, die horizontal entlang der Seitenwände 91a, b verlaufen, geführt ist. Die Verriegelungsplatte 94 kann entlang der Führungsschienen 95a, b aus der in Figur 10 gezeigten unverriegelten Stellung in eine verriegelte Stellung verfahren werden, in der sie den Aufnahmeraum 92 von oben verschließt und somit einen im Aufnahmeraum angeordneten Kitekopf verriegelt.

Am Boden des Aufnahmeraums vor der Anschlagwand 93 ist eine Öffnung 96 angeordnet, die sich durch die Kopplungsvorrichtung nach unten erstreckt und so angeordnet ist, dass sie ein Führungsseil oder ein Reff-/Führungsseil auf eine Umlenkrolle 97 lenkt, wie insbesondere aus Figur 11 zu erkennen ist. Mit Hilfe des solcherart durch die Öffnung 96 gefädelten Führungsseils kann ein Kitekopf in den Aufnahmeraum 92 dirigiert werden.

Figur 10 zeigt schematisch den Andock- bzw. Bergungsvorgang und den Startvorgang eines Kites 410 an eine Kopplungsvorrichtung 490, die auf einem Teleskopmast 500 angeordnet ist.

Wie mit dem Doppelpfeil A gekennzeichnet, nähert sich der Kite 410 mit einem Kitekopf 492 am vorderen Ende bei starkem Wind in horizontaler Richtung der Kopplungsvorrichtung 490. Der Kitekopf 452 tritt in diesem Fall von vorne in einen Aufnahmeraum 492 ein. Diese Bewegung wird durch ein Führungsseil 463 geführt und unterstützt. Das Führungsseil 463 ist im normalen Flugbetrieb am Zugseil 443 lösbar befestigt und wird nach Einholen des Zugseils vom Zugseil 443 abgenommen, durch die Öffnung 496 in der Kopplungsvorrichtung geführt und kann dann den Kitekopf 452 in den Aufnahmeraum 492 ziehen.

Der mit B gekennzeichnete Doppelpfeil gibt die Richtung an, in welcher der Kitekopf 452 bei schwachen Windverhältnissen geborgen wird. In diesem Fall ist es erforderlich, den Kitekopf 452 in einer von schräg vorne oben geführten Richtung in den Aufnahmeraum 492 einzuführen.

Der mit C gekennzeichnete Doppelpfeil gibt die Richtung an, in welcher der Kitekopf 452 typischerweise gestartet wird. Der Startvorgang findet zur Erleichterung der Kontrolle vorzugsweise nach oben statt, d.h. in einer senkrechten Bewegungsrichtung.

Figur 12 zeigt eine geschnittene Seitenansicht einer Kopplungsvorrichtung 590 mit eingekoppeltem Kitekopf 552. Der Kitekopf 552 umfasst einen vorderen Abschnitt 552a und einen länglichen hinteren Abschnitt 552b. Der längliche hintere Abschnitt 552b ist an der Unterseite gegenüber dem vorderen Abschnitt 552a zurückgenommen, so dass eine Stufe zwischen dem vorderen und hinteren Abschnitt 552a, b entsteht.

Die untere Aufnahmefläche des Aufnahmeraums 592 ist am vorderen Ende mit einem Vorsprung 598 versehen, der kongruent zur Stufe am Kitekopf 552 geformt ist.

Durch diese Gestaltung des Aufnahmeraums und Kitekopfes kann der Kitekopf zunächst in einer horizontalen Bewegungsrichtung in den Aufnahmeraum eintreten und nach Anschlag an die Anschlagwand 593 sich vertikal abwärts bewegen. Eine Verriegelungsplatte 594 ist in Figur 14 in zwei Positionen abgebildet. Die Position 594a stellt die unverriegelte Stellung dar, in welcher der Kitekopf 552 in den Aufnahmeraum 592 hinein und herausbewegt werden kann. Durch Verfahren der Verriegelungsplatte 594 nach vorne wird die Verriegelungsstellung 594b erreicht. In dieser Position ist die Verriegelungsplatte 594 oberhalb des Kitekopfes 552 angeordnet und verhindert somit, dass der Kitekopf sich nach oben bewegen kann. Durch den Anschlag an dem Vorsprung 598 mit dem vorderen Kitekopfabschnitt 552a ist der Kitekopf somit in der Kopplungsvorrichtung verriegelt.

Figur 11 zeigt schematisch einen Kite 610 mit zwei um die Mittellängsachse angeordneten Belüftungsöffnungen 620a, b. Die Belüftungsöffnungen sind in Längsrichtung des Kites gesehen links und rechts von einem Kitestick (nicht dargestellt) angeordnet.

Weiterhin ist in Figur 11 eine Kopplungsvorrichtung 690 abgebildet. Die Kopplungsvorrichtung umfasst zwei Abdeckplatten 699a, b, die solcherart an der Kopplungsvorrichtung befestigt sind, dass sie dann, wenn der Kite 610 an der Kopplungsvorrichtung 690 angekoppelt ist, die Belüftungsöffnungen 620a, b abdecken. Auf diese Weise wird eine weitere Belüftung des Innenraums des Kites 610 vermieden und somit der Reffvorgang des Kites 610 erleichtert.

Ein Betätigungshebel ist im Bereich des Kitekopfs angeordnet und mit einer Klemmvorrichtung für die Reffleinen bzw. das Reff-/Führungsseil gekoppelt. Der Betätigungshebel 672 wird bei Ankopplung an den Mastkopf durch Anstoßen am Mastkopf verschwenkt und löst die Klemmung der Klemmvorrichtung.

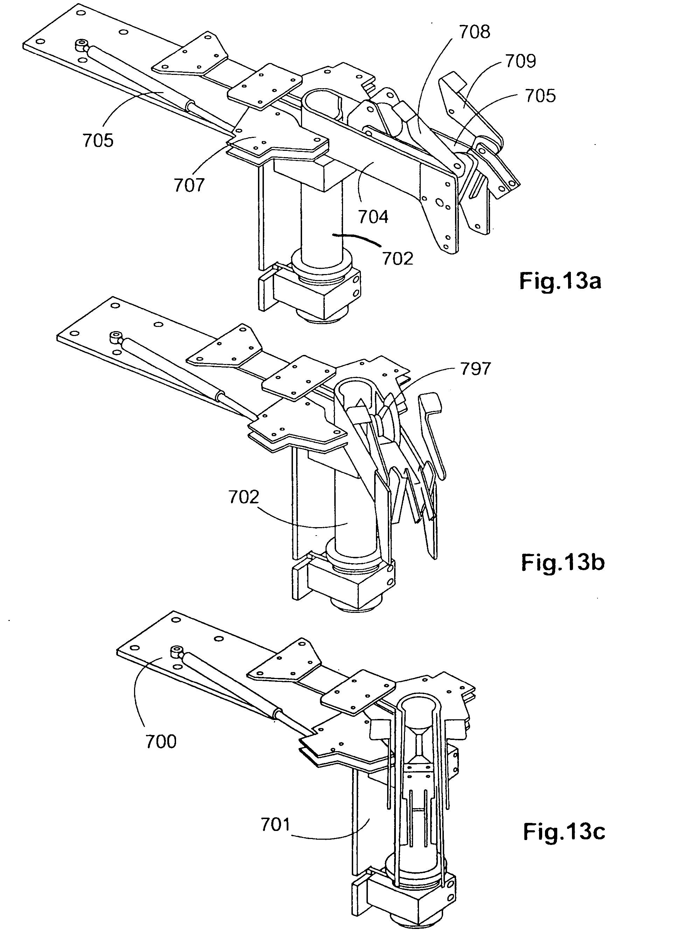

Die Figuren 13a-c zeigen die mechanische Verbindungsvorrichtung der Kopplungsvorrichtung gemäß den Figuren 10, 11 an einem Mast. Eine Platte 700 sowie eine Platte 701, die senkrecht zur Platte 700 angeordnet ist, werden starr am Mast befestigt.

An den Platten ist eine Drehachse 702 drehbar gelagert, welche mit Auslegerarmen 704, 705 verbunden ist. An den Auslegerarmen 704, 705 ist eine Umlenkrolle 797 drehbar gelagert, welche der Umlenkung des Führungsseils bei Führen des Kitekopfs in den Aufnahmeraum oder aus diesem heraus dient.

Die Drehbewegung um die Drehachse 702 wird mittels eines Dämpferelements 706, welches mit einem Ende an der Platte 700 befestigt ist und mit dem anderen Ende an einem Auslegearm 707, der seinerseits am Auslegerarm 704 befestigt ist, befestigt.

Die Drehachse 702 ermöglicht somit ein Verschwenken der Kopplungsvorrichtung um eine vertikale Achse.

Am vorderen Ende der Auslegerarme 704, 705 ist eine Schwenkvorrichtung angeordnet, welche eine geringe Verschwenkung zweier Auslegerarme 708, 709 um eine horizontale Achse ermöglicht. Diese passive Verschwenkbarkeit um eine horizontale Achse ermöglicht dem Kite im angekoppelten Zustand eine gewisse Beweglichkeit und dient so der Entlastung des Kitesticks bei Krafteinwirkungen auf den Kite, die zum Beispiel durch Windstöße oder Schiffsbewegungen hervorgerufen werden können. Zudem kann der Kite durch Verschwenkung um diese Achse heruntergelassen werden.

## Patentansprüche

1. Aerodynamisches Profilelement zur Energieerzeugung mittels Zugkraft, insbesondere zum Antreiben von Wasserfahrzeugen, umfassend:
- eine obere flexible Lage (111), die sich in einer Querrichtung und einer Längsrichtung erstreckt,
- eine untere flexible Lage (112), die sich parallel zur oberen Lage erstreckt und mittels mehrerer sich in Tiefenrichtung des Profilelements erstreckender Stege (121) mit der oberen Lage verbunden ist,
- einen luftgefüllten Innenraum zwischen der oberen und der unteren Lage
- zumindest eine zwischen zwei parallel zueinander liegenden Vorderkanten der oberen und unteren Lage angeordnete Belüftungsöffnung (120a-d) zum Belüften des Innenraums,
- mehrere Zugleinen (140a-f), die mit einem ersten Ende an beabstandeten Orten am Profilelement befestigt sind und mit einem zweiten Ende mit einem Zugseil (143) verbunden sind zum Verbinden des Profilelements mit einem Wasserfahrzeug,
- mehrere an einem ersten Ende an den Lagen und/oder Stegen befestigte Reffleinen (260a, 262a), die ausgebildet sind, um die Größe des Profilelements durch Reffen oder Entreffen der oberen und unteren Lage zu verringern bzw. zu vergrößern,
**gekennzeichnet durch** ein sich in Längsrichtung des Profilelements erstreckendes Stabelement (150) zur Stabilisierung des aerodynamischen Profils, wobei das Stabelement an der oberen und/oder unteren Lage und/oder an einem Steg befestigt ist und an dem Stabelement zumindest eine der Reffleinen aus einem sich in Querrichtung des Profilelements der oberen bzw. unteren Lage von dem Befestigungspunkt am ersten Ende erstreckenden Reffleinenabschnitt (260a) in einen sich in Längsrichtung erstreckenden Reffleinenabschnitt (262a) umgelenkt werden.

2. Profilelement nach Anspruch 1,
**dadurch gekennzeichnet, dass** sich das Stabelement (150) nur über einen Teil der Länge der Lagen erstreckt, insbesondere nur über ein Drittel der Länge der Lagen.

3. Profilelement nach Anspruch 1 oder 2,
**dadurch gekennzeichnet, dass** sich wenigstens ein in Querrichtung der oberen bzw. unteren Lage erstreckender Reffleinenabschnitt zumindest in einem Abschnitt solcherart schräg zur Querrichtung verläuft, dass bei Zug an diesem Reffleinenabschnitt eine Reffung der Lagen in Quer- und Längsrichtung erfolgt.

4. Profilelement nach einem der vorhergehenden Ansprüche,
**dadurch gekennzeichnet, dass** zumindest zwei am Profilelement befestigte Reffleinenabschnitte miteinander verbunden sind und über eine an den Reffleinenabschnitten laufende Rolle, an der eine gemeinsame Reffleinenfortführung befestigt ist, gerefft und entrefft werden.

5. Profilelement nach einem der vorhergehenden Ansprüche, umfassend:
ein zentrales Reffseil (263), mit dessen ersten Ende alle zweiten Enden der Reffleinen (262a, b) verbunden sind,
**dadurch gekennzeichnet, dass** sich das zentrale Reffseil oder das zweite Ende der Reffleinen in einer in Bezug auf die Querrichtung des Profilelements in der Symmetrieachse liegenden in Richtung dieser Symmetrieachse aus der vorderen Kante des Profilelements erstreckt/erstrecken und das zentrale Reffseil so mit seinem zweiten Ende lösbar (244) zwischen dem ersten und zweiten Ende des zentralen Zugseils (243) befestigt ist, dass das zentrale Reffseil als Führungsseil für den Startvorgang und die Bergung des Profilelements dienen kann.

6. Profilelement nach dem vorhergehenden Anspruch,
**dadurch gekennzeichnet, dass** das zweite Ende des zentralen Reffseils mittels einer Kopplungsvorrichtung lösbar und vorzugsweise verschieblich mit dem Zugseil verbunden ist.

7. Profilelement nach einem der beiden vorhergehenden Ansprüche,
**gekennzeichnet durch** eine Seilklemmvorrichtung (270) im Bereich des Profilelements, die ausgebildet ist, um das zentrale Reffseil oder die Reffleinen lösbar zu klemmen.

8. Profilelement nach dem vorhergehenden Anspruch mit einem sich in Längsrichtung erstreckenden Stabelement,
**dadurch gekennzeichnet, dass** die Seilklemmvorrichtung bei Zug am zentralen Reffseil selbstklemmend ist, am Stabelement (250) im Bereich der vorderen Kante des Profilelements befestigt ist und mit Betätigungsmitteln gekoppelt ist, welche ein Öffnen der Seilklemmvorrichtung ermöglichen.

9. Profilelement nach einem der vorhergehenden Ansprüche,
**dadurch gekennzeichnet, dass** der Innenraum zumindest eine Entlüftungsöffnung (80a, b) und eine Verschlussvorrichtung (81, 82, 84a, b) zum variablen Verschließen der zumindest einen Entlüftungsöffnung aufweist.

10. Profilelement nach dem vorhergehenden Anspruch,
**dadurch gekennzeichnet, dass** die Entlüftungsöffnung als länglicher Schlitz ausgeführt ist, dass entlang zumindest einer Öffnungskante, vorzugsweise entlang beiden Öffnungskanten der Entlüftungsöffnung, jeweils ein elastisch verformbares Stabelement (81, 82) befestigt ist, an dessen beiden Enden ein Öffnungsseil (84a, b) solcherart befestigt ist, dass bei Zug an dem Öffnungsseil das Stabelement elastisch gekrümmt wird und hierdurch die Entlüftungsöffnung geöffnet wird.

11. Profilelement nach einem der beiden vorhergehenden Ansprüche,
**dadurch gekennzeichnet, dass** die Entlüftungsöffnung in einem Bereich, der im Flugzustand des Profilelements in einem Unterdruckbereich außerhalb des Profilelements liegt, angeordnet ist, insbesondere im Bereich zwischen den hinteren Kanten der Lagen oder in der oberen Lage.

12. Profilelement nach einem der vorhergehenden Ansprüche,
**dadurch gekennzeichnet, dass** der Bereich zwischen den vorderen Kanten der oberen und unteren Lage um die Mittellängsachse des Profilelements mehrere Belüftungsöffnungen (120a-d) aufweist und im äußeren Bereich verschlossen ist, wobei die Belüftungsöffnungen vorzugsweise 10-30%, der vorderen Windangriffsfläche, also der Stirnfläche bzw. Flügelvorderkante des aerodynamischen Profilelements einnehmen und weiter vorzugsweise mittels Latten aufgehalten werden.

13. Profilelement nach einem der vorhergehenden Ansprüche,
**dadurch gekennzeichnet, dass** am Zugseil zumindest eine, vorzugsweise mehrere Signalvorrichtungen angeordnet sind, vorzugsweise selbstleuchtende Signalelemente, die insbesondere in einem Abstand von etwa 100 Metern am Zugseil befestigte rote und weiße Signalelemente umfasst, vorzugsweise selbstleuchtende Rundumlichter.

14. Profilelement nach einem der beiden vorhergehenden Ansprüche,
**dadurch gekennzeichnet, dass** Signalmittel selbstleuchtend sind und zur Energieversorgung induktiv an eine im Zugseil verlaufende, stromführende Leitung angekoppelt sind.

15. Antriebsvorrichtung für ein Schiffsfahrzeug, umfassend ein Profilelement nach einem der vorhergehenden Ansprüche und eine Start- und Bergevorrichtung für ein Profilelement nach einem der vorhergehenden Ansprüche mit einem sich in Längsrichtung erstreckenden Stabelement, umfassend:
- einen Mast (500), an dessen oberen Ende ein Mastkopf befestigt ist,
- eine am Mastkopf angeordnete, um eine vertikale Achse drehbare Kopplungsvorrichtung (90) zum Koppeln des vorderen Endes des Stabelements mit dem Mastkopf,
wobei die Kopplungsvorrichtung einen von zwei sich vertikal erstreckenden Seitenwänden (91a, b) begrenzten Aufnahmeraum (92) umfasst, in dem das vordere Ende (552) des Stabelements aufgenommen werden kann und der zu einer ersten horizontalen Seite durch eine Anschlagwand (93) begrenzt ist, und zu einer dieser gegenüberliegenden zweiten horizontalen Seite und nach oben hin offen ist zum Einführen des vorderen Endes des Stabelements von seitlich oder oben.,
**dadurch gekennzeichnet, dass** der Mast im Bugbereich des Schiffes angeordnet ist und das Zugseil an einem Holepunkt im Bugbereich des Schiffes angelenkt ist, der in Fahrtrichtung ca. ein Drittel der Länge des Profilelements vor dem Mast angeordnet ist.

## Claims

1. An aerodynamic profile element for generating energy by means of a traction force, in particular for driving watercraft, comprising:
- an upper flexible layer (111) which extends in a transverse direction and a longitudinal direction,
- a lower flexible layer (112) which extends parallel to the upper layer and is connected to the upper layer by means of a plurality of webs (121) extending in the depthwise direction of the profile element,
- an air-filled interior space between the upper and the lower layer,
- at least one ventilation opening (120a-d) arranged between two mutually parallel front edges of the upper and lower layer for the purpose of ventilating the interior space,
- a plurality of traction lines (140a-f) which are fixed to the profile element at spaced points by a first end and are connected to a traction cable (143) by a second end for the purpose of connecting the profile element to a watercraft,
- a plurality of reefing lines (260a, 262a) which are fixed to the layers and/or webs at a first end and are constructed to reduce or increase the size of the profile element by reefing or unreefing the upper and lower layer, **characterised by** a rod element (150) extending in the longitudinal direction of the profile element for stabilising the aerodynamic profile, wherein the rod element is fixed to the upper and/or lower layer and/or to a web and, at the rod element, at least one of the reefing lines is deflected from a reefing line portion (260a), extending from the fixing point at the first end in the transverse direction of the profile element of the upper or lower layer, into a reefing line portion (262a) extending in the longitudinal direction.

2. A profile element according to Claim 1,
**characterised in that** the rod element (150) extends only over part of the length of the layers, in particular only over a third of the length of the layers.

3. A profile element according to Claim 1 or 2,
**characterised in that** at least one reefing line portion extending in the transverse direction of the upper or lower layer proceeds at an angle to the transverse direction, at least in one portion, such that, when there is tension on this reefing line portion, reefing of the layers occurs in the transverse and longitudinal direction.

4. A profile element according to one of the preceding claims,
**characterised in that** at least two reefing line portions fixed to the profile element are connected to one another and are reefed and unreefed by way of a roller which runs on the reefing line portions and is fixed to a common reefing line continuation.

5. A profile element according to one of the preceding claims, comprising:
a central reefing cable (263) whereof the first end is connected to all second ends of the reefing lines (262a, b),
**characterised in that** the central reefing cable or the second end of the reefing lines extend(s) from the front edge of the profile element in a direction of the axis of symmetry which, with respect to the transverse direction of the profile element, is located in the axis of symmetry and the central reefing cable is detachably (244) fixed by its second end between the first and second end of the central traction cable (243), so that the central reefing cable can serve as a guide cable for the launch and retrieval of the profile element.

6. A profile element according to the preceding claim,
**characterised in that** the second end of the central reefing cable is detachably and preferably displaceably connected to the traction cable by means of a coupling device.

7. A profile element according to one of the two preceding claims,
**characterised by** a cable clamping device (270) in the region of the profile element, which is constructed to detachably clamp the central reefing cable or the reefing lines.

8. A profile element according to the preceding claim, having a rod element extending in the longitudinal direction,
**characterised in that** the cable clamping device is self-clamping when there is tension on the central reefing line, is fixed to the rod element (250) in the region of the front edge of the profile element and is coupled to actuating means, which enable the self-clamping device to open.

9. A profile element according to one of the preceding claims,
**characterised in that** the interior space has at least one vent opening (80a, b) and a closing device (81, 82, 84a, b) for variably closing the at least one vent opening.

10. A profile element according to the preceding claim,
**characterised in that** the vent opening is constructed as an elongated slot, **in that** a respective resiliently deformable rod element (81, 82) is fixed along at least one opening edge, preferably along both opening edges, of the vent opening, opening cables (84a, b) being fixed to the two ends of the rod element in such a way that, when there is tension on the opening cable, the rod element is resiliently curved and the vent opening is thus opened.

11. A profile element according to one of the two preceding claims,
**characterised in that** the vent opening is arranged in a region which, in the flying condition of the profile element, is located in a low-pressure region outside the profile element, in particular in the region between the rear edges of the layers or in the upper layer.

12. A profile element according to one of the preceding claims,
**characterised in that** the region between the front edges of the upper and lower layer has a plurality of ventilation openings (120a-d) about the centre longitudinal axis of the profile element and is closed in the outer region, wherein the ventilation openings occupy preferably 10-30% of the front face exposed to the wind, i.e. the end face or front edge of the aerofoil of the aerodynamic profile element and are further held open by means of slats.

13. A profile element according to one of the preceding claims,
**characterised in that** at least one signal device, preferably a plurality of signal devices, is/are arranged on the traction cable, preferably self-lighting signal elements which in particular comprise red and white signal elements, preferably self-lighting rotating lights, fixed to the traction cable at a spacing of approximately 100 metres.

14. A profile element according to one of the two preceding claims,
**characterised in that** signal means are self-lighting and, for energy supply, are inductively coupled to a current carrying line extending in the traction cable.

15. A drive device for a watercraft, comprising a profile element according to one of the preceding claims and a launch and retrieval device for a profile element according to one of the preceding claims, having a rod element extending in the longitudinal direction, comprising:
- a mast (500) at the upper end of which a masthead is fixed,
- a coupling device (90), which is arranged on the masthead and is rotatable about a vertical axis, for coupling the front end of the rod element to the masthead, wherein the coupling device comprises a receiving space (92) which is delimited by two vertically extending side walls (91a, b) and in which the front end (552) of the rod element can be received and which is delimited to a first horizontal side by an abutment wall (93) and is open towards a second horizontal side located opposite thereto and towards the top for the purpose of introducing the front end of the rod element from the side or from above, **characterised in that** the mast is arranged in the bow region of the watercraft and the traction cable is linked to a hoisting point in the bow region of the watercraft, which is arranged approximately one third of the length of the profile element in front of the mast as seen in the direction of travel.

## Revendications

1. Élément profilé aérodynamique destiné à produire de l'énergie par le biais d'une force de traction, en particulier pour propulser des bateaux, comprenant :
- une couche supérieure flexible (111) qui s'étend dans un sens transversal et dans un sens longitudinal,
- une couche inférieure flexible (112) qui s'étend parallèlement à la couche supérieure et qui est reliée à cette dernière au moyen de plusieurs points de tire (121) qui s'étendent dans le sens de la profondeur de l'élément profilé,
- un espace intérieur rempli d'air entre la couche supérieure et la couche inférieure,
- au moins un orifice d'entrée d'air (120a-d) ménagé entre deux bords avant parallèles entre eux des couches supérieure et inférieure afin de permettre à l'air de pénétrer dans l'espace intérieur,
- plusieurs écoutes de traction (140a-f) fixées par une première extrémité à des endroits espacés sur l'élément profilé et reliés par une deuxième extrémité à un filin de traction (143) afin de relier l'élément profilé à un bateau,
- plusieurs écoutes d'arisage (260a, 262a), fixées par une première extrémité aux couches et/ou aux points de tire, qui sont configurées de façon à réduire ou augmenter la taille de l'élément profilé en choquant ou bordant les couches supérieure et inférieure,
**caractérisé par** un élément en forme de barre (150) qui s'étend dans le sens longitudinal de l'élément profilé afin de stabiliser le profil aérodynamique, ledit élément en forme de barre étant fixé à la couche supérieure et/ou inférieure couche et/ou à un point de tire et, au niveau de l'élément en forme de barre, une au moins des écoutes d'arisage change de direction pour passer d'un segment d'écoute d'arisage (260a) qui s'étend dans le sens transversal de l'élément profilé de la couche supérieure ou inférieure depuis le point de fixation à la première extrémité à un segment d'écoute d'arisage (262a) qui s'étend dans le sens longitudinal.

2. Élément profilé selon la revendication 1, **caractérisé en ce que** l'élément en forme de barre (150) s'étend sur une partie seulement de la longueur des couches, en particulier seulement sur un tiers de la longueur des couches.

3. Élément profilé selon la revendication 1 ou la revendication 2, **caractérisé en ce qu'**au moins un segment d'écoute d'arisage qui s'étend dans le sens transversal de la couche supérieure ou inférieure présente au moins dans un segment une obliquité par rapport au sens transversal telle qu'une traction sur ce segment d'écoute d'arisage provoque un bordage des couche dans le sens transversal et longitudinal.

4. Élément profilé selon l'une des revendications précédentes, **caractérisé en ce qu'**au moins deux segments d'écoute d'arisage fixés à l'élément profilé sont reliés l'un à l'autre et sont bordés et choqués par le biais d'un chariot d'écoute glissant sur les segments d'écoute d'arisage auquel est fixées un prolongement d'écoute d'arisage commun.

5. Élément profilé selon l'une des revendications précédentes, comprenant un filin d'arisage central (263) à la première extrémité duquel sont fixées toutes les deuxièmes extrémités des écoutes d'arisage (262a, b), **caractérisé en ce que** le filin d'arisage central ou la deuxième extrémité des écoutes d'arisage s'étend dans une direction située dans l'axe de symétrie par rapport au sens longitudinal de l'élément profilé, dans le sens dudit axe de symétrie, à partir du bord avant de l'élément profilé et le filin d'arisage central est fixé de manière détachable (244) par sa deuxième extrémité entre la première et la deuxième extrémité du filin de traction central (243) de telle façon que le filin d'arisage central peut être utilisé comme filin de guidage pour le lancement et la récupération de l'élément profilé.

6. Élément profilé selon la revendication précédente, **caractérisé en ce que** la deuxième extrémité du filin d'arisage central est reliée au filin de traction de manière détachable et de préférence de manière déplaçable au moyen d'un dispositif d'accouplement.

7. Élément profilé selon l'une des deux revendications précédentes, **caractérisé par** un dispositif de blocage du filin (270) dans la zone de l'élément profilé, configuré de façon à bloquer de manière amovible le filin d'arisage central ou les écoutes d'arisage.

8. Élément profilé selon la revendication précédente, comprenant un élément en forme de barre qui s'étend dans le sens longitudinal, **caractérisé en ce que** le dispositif de blocage du filin est autobloquant en cas de traction sur le filin d'arisage central, fixé à l'élément en forme de barre (250) dans la zone du bord avant de l'élément profilé et couplé par des moyens de manoeuvre permettant l'ouverture du dispositif de blocage du filin.

9. Élément profilé selon l'une des revendications précédentes, **caractérisé en ce que** l'espace intérieur présente au moins un orifice de sortie d'air (80a, b) et un dispositif d'obturation (81, 82, 84a, b) pour fermer de manière variable ledit au moins un orifice de sortie d'air.

10. Élément profilé selon la revendication précédente, **caractérisé en ce que** l'orifice de sortie d'air est réalisé sous la forme d'une fente oblongue, **en ce que** le long d'au moins un bord, de préférence le long des deux bords de l'orifice de sortie d'air, est respectivement fixé un élément en forme de barre (81, 82) déformable élastiquement aux deux extrémités duquel un filin d'ouverture (84a, b) est fixé de telle manière qu'une traction sur le filin d'ouverture incurve élastiquement l'élément en forme de barre et ouvre ainsi l'orifice de sortie d'air.

11. Élément profilé selon l'une des revendications précédentes, **caractérisé en ce que** l'orifice de sortie d'air est ménagé dans une zone qui, lorsque l'élément profilé est sortie, se situe dans une zone de dépression à l'extérieur de l'élément profilé, en particulier dans la zone située entre les bords arrière des couches ou dans la couche supérieure.

12. Élément profilé selon l'une des revendications précédentes, **caractérisé en ce que** la zone située entre les bords avant des couches supérieure et inférieure présente autour de l'axe médian longitudinal de l'élément profilé plusieurs orifices d'entrée d'air (120a-d) et est fermée dans la zone extérieure, les orifices d'entrée d'air occupant de préférence 10 à 30% de la surface avant de prise au vent, c'est-à-dire de la face frontale ou bord d'attaque des l'élément profilé aérodynamique et, de préférence également, sont maintenus au moyen de lattes.

13. Élément profilé selon l'une des revendications précédentes, **caractérisé en ce qu'**au moins un, de préférence plusieurs dispositifs de signalisation sont disposés sur le filin de traction, de préférence des éléments de signalisation autoluminescents, comprenant notamment des éléments de signalisation rouges et blancs fixés à une distance d'environ 100 mètres au filin de traction, de préférence des feux de signalisation à 360° autoluminescents.

14. Élément profilé selon l'une des deux revendications précédentes, **caractérisé en ce que** les moyens de signalisation sont autoluminescents et couplés de manière inductive à une ligne électrique intégrée dans le filin de traction pour leur alimentation en énergie.

15. Dispositif de propulsion pour un bateau, comprenant un élément profilé selon l'une des revendications précédentes et un dispositif de lancement et récupération pour un élément profilé selon l'une des revendications précédentes, avec un élément en forme de barre qui s'étend dans le sens longitudinal, comprenant :
- un mât (500) à l'extrémité supérieure duquel est fixée une tête de mât,
- un dispositif d'accouplement (90), fixé à la tête de mât et pouvant tourner autour d'un axe vertical pour relier l'extrémité avant de l'élément en forme de barre à la tête de mât,
dans lequel le dispositif d'accouplement comprend un logement (92) délimité par deux parois latérales (91a, b) s'étendant verticalement dans lequel l'extrémité avant (552) de l'élément en forme de barre peut être reçue et fermé sur un premier côté horizontal par une joue (93) et, sur un deuxième côté horizontal opposé au premier, ouvert vers le haut pour permettre l'introduction de l'extrémité avant de l'élément en forme de barre par le côté ou par le haut, **caractérisé en ce que** le mât est disposé dans la zone de proue du bateau et le filin de traction est relié dans la zone de proue du bateau à un point de halage qui est disposé dans le sens d'avance à un tiers environ de la longueur de l'élément profilé à l'avant du mât.
